# EUROPEAN PATENT APPLICATION

(11) **EP 4 742 179 A1**
(43) Date of publication of application: **13.05.2026**
(21) Application number: 25214116.3
(22) Date of filing: 06.11.2025
(51) Int. Cl.: G06V 10/75, G06T 7/246, G06V 10/82, G06V 20/58

(54) **SCENE UNDERSTANDING WITH VISUAL DATA**

(30) Priority: 06.11.2024 US 202463716757 P
(71) Applicant: Cambridge Mobile Telematics Inc., Cambridge, MA 02142 (US)
(72) Inventor: Malalur, Paresh, Cambridge, 02142 (US); Trivedi, Onkar, Cambridge, 02142 (US); Badrinarayanan, Dheeptha, Cambridge,, 02142 (US); Badrinath, Sandeep, Cambridge,, 02142 (US)
(74) Representative: Mewburn Ellis LLP

(57) **Abstract**

Techniques for detecting, based at least in part on a first image obtained at a first time, a first indication of a first object included in the first image obtained using a vehicle sensor. The techniques can further include generating, based at least in part on the first indication, a first feature space representation of the first object included in the first image. The techniques can further include comparing the first feature space representation of the first object with a set of stored feature space representations. Responsive to the comparing, the techniques can further include assigning a first unique identifier to the first feature space representation; generating, based on the first indication, a first distance of the first object from the vehicle sensor; and associating the first distance, the first unique identifier, and the first time in memory.

## Description

### CROSS-REFERENCE TO RELATED APPLICATION

This application claims priority to and the benefit of U.S. Provisional Patent Application No. 63/716,757, filed November 6, 2024, the entire contents of which is hereby incorporated by reference for all purposes.

### BACKGROUND OF THE INVENTION

Modern vehicle safety systems increasingly rely on advanced sensing technologies to monitor and assess driving conditions, vehicle dynamics, and environmental factors in real time. Techniques for accurately tracking objects using information generated from sensing technologies are needed for further advancement.

### SUMMARY OF THE INVENTION

Implementations may include techniques for detecting, based at least in part on a first image obtained at a first time, a first indication of a first object included in the first image obtained using a vehicle sensor. The techniques can further include generating, based at least in part on the first indication, a first feature space representation of the first object included in the first image. The techniques can further include comparing the first feature space representation of the first object with a set of stored feature space representations. Responsive to the comparing, the techniques can further include assigning a first unique identifier to the first feature space representation; generating, based on the first indication, a first distance of the first object from the vehicle sensor; and associating the first distance, the first unique identifier, and the first time in memory.

These and other aspects, features, and implementations can be expressed as methods, apparatus, systems, components, program products, means or steps for performing a function, and in other ways.

Other features, objects, and advantages of the disclosure will be apparent from the description and drawings, and from the claims.

### BRIEF DESCRIPTION OF THE DRAWINGS

FIG. 1 illustrates an example of an object location determination system, according to certain embodiments.
FIG. 2 illustrates an example of an object detection system, according to certain embodiments.
FIG. 3 illustrates a first example process performed by an object location determination system, according to certain embodiments.
FIG. 4 illustrates a second example process performed by an object location determination system, according to certain embodiments.
FIG. 5 illustrates a third example process performed by an object location determination system, according to certain embodiments.
FIG. 6 illustrates a fourth example process performed by an object location determination system, according to certain embodiments.
FIG. 7 illustrates a block diagram of an exemplary computer apparatus, according to certain embodiments.
FIG. 8 illustrates an example of vehicle tracking at two different times, according to certain embodiments.

### DETAILED DESCRIPTION OF SPECIFIC EMBODIMENTS

Embodiments described herein are directed to techniques for detecting and tracking objects over the course of time provided one or more images. Image based systems utilizing cameras (e.g., front facing cameras) and image processing algorithms can be used to capture visual data before, during, and/or after events (e.g., drive, a crash, and/or hard braking, etc.). Systems are typically designed to detect and track objects such as vehicles, pedestrians, and obstacles within a vehicle's field of view. However, conventional approaches to video-based object detection and tracking suffer from technical limitations, including difficulties in persistently tracking objects across frames, handling occlusions, and maintaining consistent object identification in dynamic environments. Existing models, such as those for object detection, tracking, and identification, are frequently optimized for isolated tasks and single-image analysis, lacking a robust and integrated pipeline for associating visual data with real-world coordinates and ensuring temporal consistency across images. As a result, there is a need for improved techniques that can more accurately and reliably detect, track, and/or identify objects across multiple image frames, even in the presence of occlusions and/or challenging lighting conditions, while also enabling the projection of object locations into real-world spatial coordinates for enhanced incident analysis (e.g., post-event analysis). The techniques described herein that address such needs can improve vehicle safety, post-event analysis, and object tracking capabilities.

Techniques described herein can enable a range of technical improvements in video-based object detection, tracking, and scene reconstruction, particularly for challenging real-world applications (e.g., vehicle crash analysis using dashcam footage). The techniques can integrate multiple machine learning models for object identification, feature association across frames, and monocular depth estimation. The models may include a You Only Look Once (YOLO) model for fast and reliable object detection, a Mask-RCNN model for high-fidelity segmentation, a Re3 model for temporal object tracking, a Deep SORT model for object identification and feature association across frames, and/or a monocular depth estimation model for distance analysis.

Conventional pipelines, at best, may use such models in isolation. According to embodiments of the present invention, these diverse tools are coordinated in a tightly-coupled, feedback-driven pipeline. For example, the YOLO model can be used to rapidly generate bounding boxes, which can then be injected directly into an RoIAlign layer of the Mask-RCNN model, bypassing the Mask-RCNN model's conventional region proposal process (performed using a region proposal network (RPN)), thereby achieving both rapid and pixel-precise object localization.

Additionally, the techniques described herein can be implemented using a parallel and redundant architecture in which object detection and tracking mechanisms are run concurrently on each frame. The outputs of these parallel processes can be cross-validated and detections from the object detection system can be used to confirm or invalidate the results of the object tracking system, and vice versa. For example, an object tracking system may indicate an object is included in an image that the object tracking system does not indicate is included in the image, or vice versa. Certain embodiments can determine which of the indications to use to generate an object location and/or identify an object. This redundancy can increase robustness in the face of challenges, including, but not limited to, temporary occlusions of objects, lighting changes, and/or object movement.

Certain embodiments can maintain a temporal memory of object features and unique identifiers (IDs), which can enable embodiments to recognize and persistently track objects even after they disappear from view for one or more frames (e.g., images). The memory of object features can be actively managed using a time to live to prevent confusion between visually similar objects over time and to limit resources (e.g., processing, memory, and/or energy, etc.) used by embodiments. Furthermore, the described object detection system can enable enhanced monocular depth estimation. By precisely segmenting objects (e.g., using a pixel-wise mask) and aggregating pixel-wise depth data, the system can determine accurate object-level distance estimates and projects these estimates into world coordinates using Global Positioning System (GPS) and vehicle location information, enabling analysis with precision that may otherwise require stereo vision or more specialized hardware.

Certain embodiments described herein 1) use an object detector to identify vehicles; 2) use object tracking to enable object permanence; 3) use temporal regression to provide support when an object detector fails; 4) perform depth inference to enable computation of 3D positioning of an object without stereo cameras or depth sensors; and 5) use visual processing in combination with telematics data to infer a driving context.

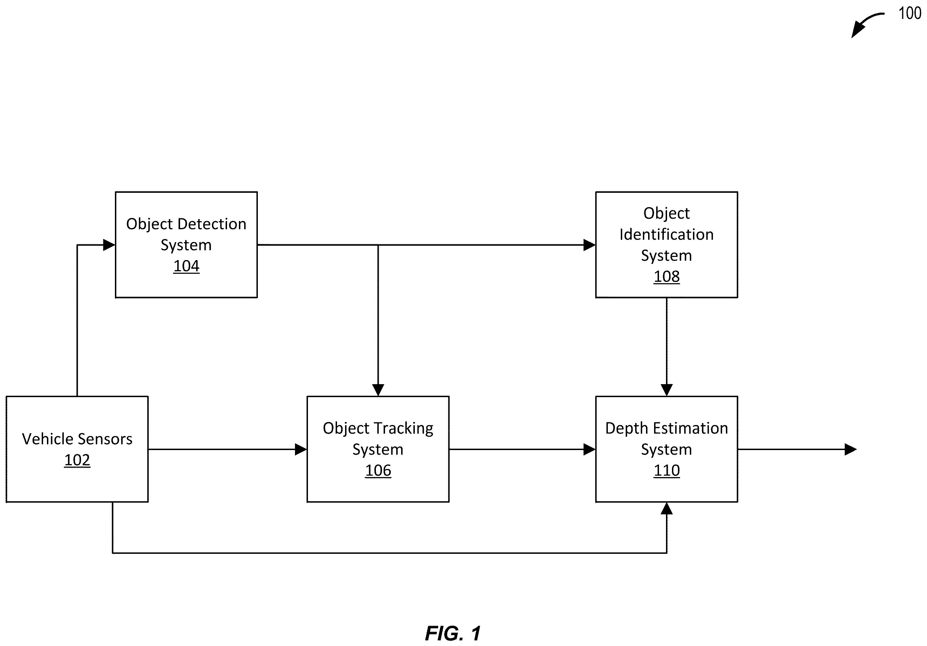

FIG. 1 illustrates an example of an object location determination system 100, according to certain embodiments. The object location determination system 100 can be used to determine a location of an object (e.g., a bike, a pedestrian, a bus, etc.) based on information generated and/or obtained by vehicle sensors 102. The location of the object may be absolute (e.g., defined by GPS coordinates) and/or relative (e.g., defined by a distance from a vehicle that includes the vehicle sensors 102. The location of the object may be determined using the vehicle sensors 102, an object detection system 104, an object tracking system 106, an object identification system 108, and/or a depth estimation system 110.

The vehicle sensors 102 may be integrated with a vehicle (e.g., a car, a bus, a plane, a drone, a boat, a bike, a scooter, an all-terrain vehicle (ATV), etc.), mounted to the vehicle, and/or included in a device placed in or on the vehicle. The vehicle sensors 102 may include a camera. The camera can be a monocular camera. The camera may be configured to take both video (e.g., a set of images) and/or photographic images. Images may be stored as image data ( e.g., in a local and/or remote database or other data storage). Images may include color images and/or grayscale images. The vehicle sensors 102 may include light detection and ranging (LIDAR) sensors and/or other sensors that can work in conjunction with the camera to enhance the image data (e.g., adding precise distance measurements, contour data, and/or other data, etc.). The vehicle sensors 102 can include a GPS sensor, LIDAR sensors, an inertial (e.g., accelerometer, gyroscope, etc.) sensor, or other sensors. The vehicle sensors 102 can generate sensor information which can be stored (e.g., in a database or other data storage).

The vehicle sensors 102 may transmit one or more images to the object detection system 104, object tracking system 106, and/or depth estimation system 110. The vehicle sensors 102 may transmit vehicle location information to the depth estimation system 110. The vehicle location information may be obtained using the vehicle sensors 102. The vehicle location information may identify a location (e.g., using a GPS coordinate) of the vehicle that includes the vehicle sensors 102.

The object detection system 104 may receive a first image from the vehicle sensors 102. The first image may include zero or more objects. The object detection system 104 may detect an object based on a single input image. The object detection system 104 may generate a first indication of objects included in an image. The first indication may include a bounding box that identifies the objects. The bounding box may include two coordinates (e.g., pixel coordinates) within the first image received from the vehicle sensors 102. The first indication may include an object mask that indicates which pixels of the first image are mapped to (e.g., visually represent) the object. The two coordinates may define two opposite corners of the bounding box. For an object indicated within the first image, the object detection system 104 may transmit the first indication of the object to the object identification system 108 and/or the object tracking system 106.

The object tracking system 106 may receive the first indication from the object detection system 104. The object tracking system 106 may receive a second image from the vehicle sensors 102. The second image may be a different image than the first image used to generate the first indication. The second image may include an image captured by the vehicle sensors 102 at a later point in time than the first image used to generate the first indication. The object tracking system 106 may enable track objects using information across images (e.g., image frames). The object tracking system 106 can track objects across images. The object tracking system 106 may be configured to generate a second indication based on (e.g., based at least in part) the second image and the first image. The second indication may indicate where the object indicated by the first indication is included in the second image. The second indication may include the information that can be included in the first indication such as a bounding box and/or an object mask. The second indication may be transmitted to the depth estimation system 110.

The object identification system 108 can identify objects. The object identification system 108 can receive the first indication of an object and/or the second indication the object. The object identification system 108 can compare an object indication that is received with any previous object identifications that have been received to determine if the indications are for the same object (e.g., the same object presented in an image at a different distance, angle, lighting, and/or size, etc.). The object identification system 108 can transmit a unique identifier of the object and/or an indication of the object to the depth estimation system 110.

The depth estimation system 110 can receive the unique identifier of the object from the object identification system 108. The depth estimation system 110 can receive an indication of the object from the object identification system 108 that the object identification system 108 received from the object detection system 104. The depth estimation system 110 can receive the second indication of the object from the object tracking system 106. The depth estimation system 110 can estimate a depth of the object indicated by the identifier received from the object tracking system 106 and/or the object identification system 108. The depth estimation system 110 may cause a depth estimate to be associated with a unique object identifier.

The depth estimation system 110 may generate a first object location based on the object indication and/or unique object identifier received from the object identification system 108. The depth estimation system 110 may generate the first object location based on the second indication received from the object tracking system 106. The depth estimation system 110 may generate the first object location based on the first image and/or the vehicle location information.

The first object location may be determined by the depth estimation system 110 by estimating a depth of the first object and determining the vehicle location information before generating the first object location based on the first object location and the vehicle location. For example, if an object is ten feet straight in front of the vehicle and the vehicle location is known, then the location of the object can be determined.

In certain embodiments, the first object location can be stored and tracked over time. The first object location can be stored for a predetermined period of time. The first object location may be stored until a specific time or event has occurred. The first object location may be stored until overwritten by more recent location information of the first object and/or another object. The first object location can be stored locally and/or remotely to the vehicle including the vehicle sensors. The first object location may be used to present (e.g., on a display) a path and/or location of the first object over time.

The depth estimation system 110 can be used to estimate the depth of one or more objects. The object identification system 108, the object tracking system 106, and the object detection system 104 can be used to process data/information relating to zero or more objects that can be included in an image.

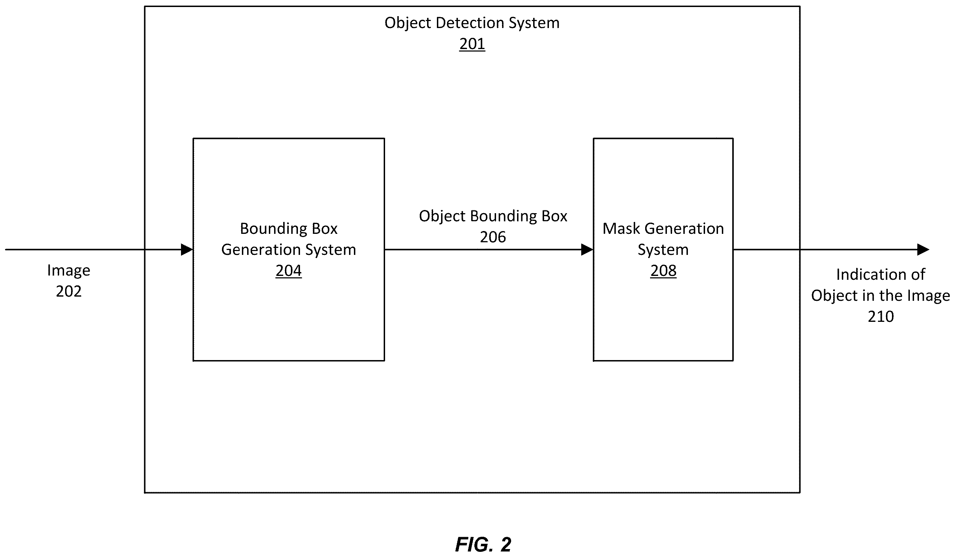

FIG. 2 illustrates an example of an object detection system 201 (e.g., object detection system 104 described above), according to certain embodiments. The object detection system 201 may include a bounding box generation system 204 and/or a mask generation system 208.

The object detection system 201 may receive an image 202. The image 202 may include an image of zero or more objects that can be detected by the object detection system 201. The object detection system 201 may be configured to detect certain objects (e.g., pedestrians, dogs, bicycles, vehicles, buses, large buses, etc.). The object detection system 201 can be used to indicate where objects are included in the image 202. In certain embodiments, the image 202 is represented by an image embedding (e.g., generated by an image embedding model, received from object identification system 108 described herein). The image 202 may be received from vehicle sensors (e.g., vehicle sensors 102 described above). The image 202 may be received from a memory that stored images. The image 202 may be included in a video.

The bounding box generation system 204 may be configured to generate an object bounding box 206 using the image 202. The bounding box generation system 204 may include a machine learning model and/or an object detection algorithm. In certain embodiments, the machine learning model includes a You Only Look Once (YOLO) object detection model. The object bounding box 206 may indicate where an object is within the image 202. The object bounding box 206 may include at least two coordinates. The two coordinates may indicate a first corner and a second corner of a bounding box (e.g., rectangular bounding box) surrounding an object included in the object bounding box 206. The first corner may be opposite to the second corner. The first corner and the second corner may be defined using pixel coordinates of the image 202. One having ordinary skill in the art with the benefit of the present disclosure would recognize other ways a bounding box may be defined (e.g., using more than two coordinates, using a circular shape, etc.). In certain embodiments, the object bounding box 206 is represented in an embedding space.

The object bounding box 206 can be transmitted from the bounding box generation system 204 to the mask generation system 208. The mask generation system 208 can receive the object bounding box 206 and generate the indication of the object included in the image 210 based on the object bounding box 206. The mask generation system 208 may include a machine learning model and/or a mask generation algorithm. The mask generation system 208 may generate mask of the object included in the object bounding box 206. The mask of the object may indicate which pixels within the bounding box map to (e.g., represent) the object. The mask of the object may be represented by fewer pixels than the bounding box of the object.

The mask generation system 208 may include a recurrent neural network (R-CNN). The mask generation system 208 may also include a segmentation model. The segmentation model may include a Mask R-CNN model or a portion of the Mask R-CNN model. The portion of the Mask R-CNN model that is used to generate a bounding box may be replaced by the bounding box generation system 204. The bounding box generation system 204 may more accurately generate a bounding box of an object than the portion of the Mask R-CNN model that is used to generate a bounding box. By injecting the object bounding box or an embedding of the object bounding box into the Mask R-CNN model, the mask generated by the Mask R-CNN model can be improved as a result of the improved bounding box accuracy while also maintaining the speed of the Mask R-CNN model. In certain embodiments, the mask generated by the Mask R-CNN model may be generated faster than a mask generated by an off the shelf Mask R-CNN model. The mask generation system 207 may be used to verify the existence of an object included in the object bounding box 206. In certain embodiments, if the object bounding box 206 is determined to not include an object (e.g., contrary to the determination of the bounding box generation system 204), a negative indication of an object being included in the image may be generated (e.g., see step S504 below).

The indication of the object included in the image 210 may include the object bounding box and/or the mask of the object. The indication of the object in the image 210 may be transmitted to an object tracking system (e.g., object tracking system 106 described above) and/or an object identification system (e.g., object identification system 108 described above). The indication of the object included in the image 210 may be saved in memory.

Although, a single object, bounding box, and mask are described above with respect to the object detection system 201, the object detection system 201, the bounding box generation system 204, and the mask generation system 208 can be used to generate indications of more than one object included in the image 202. In certain embodiments, the image 202 includes no objects detectable by the object detection system 201 and the object detection system 201 generates an indication that no objects were detected (e.g., a negative indication). In certain embodiments, when no objects are detected by the object detection system 201, no indication of objects included in the image is generated by the object detection system 201 and the lack of the indication of objects serves as an indication that no objects were detected.

In certain embodiments, the object detection system 201 includes a Mask R-CNN model and does not include a bounding box generation system 204. In such embodiments, the Mask R-CNN model may generate the mask and/or the mask to be included in the indication of the object included in the image 210. In certain embodiments, the object detection system 201 generates a confidence score and/or a class that is output with the bounding box and/or mask. The confidence score and/or the class may be generated by the bounding box generation system 204 and/or the mask generation system 208.

In certain embodiments, the object bounding box 206 is generated by object tracking system 106 described herein. In certain embodiments, a first object bounding box is generated by the object tracking system 106 and used to generate a first indication of an object included in the image and a second object bounding box is generated by the bounding box generation system 204 before one of the bounding boxes is determined (e.g., based on a confidence score comparison) to be used for subsequent processing.

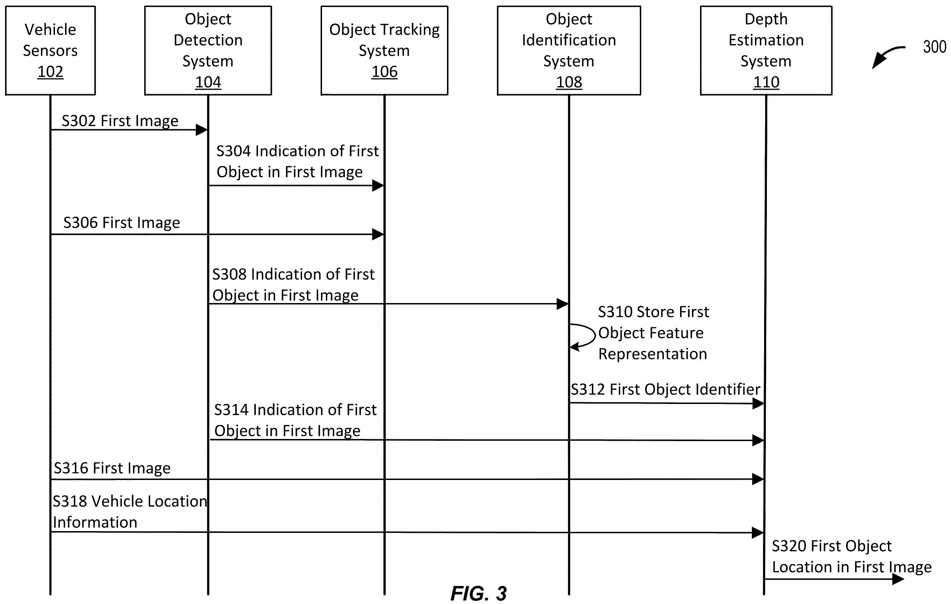

The processing depicted in FIGS. 3-6, and any other figures may be implemented in software (e.g., code, instructions, program) executed by one or more processing units (e.g., processors, cores) of the respective systems, using hardware, or combinations thereof. The software may be stored on a non-transitory storage medium (e.g., on a memory device). The method presented in FIGS. 3-6, and other figures and described herein are intended to be illustrative and non-limiting. Although FIGS. 3-6, and other figures depict the various processing steps occurring in a particular sequence or order, this is not intended to be limiting. In certain alternative embodiments, the processing may be performed in some different order or some steps may also be performed in parallel. It should be appreciated that in alternative embodiments the processing depicted in FIGS. 3-6, and other figures may include a greater number or a lesser number of steps than those depicted in the respective figures.

FIG. 3 illustrates a first example process 300 performed by an object location determination system (e.g., object location determination system 100 described above), according to certain embodiments. As described above, the object location determination system may include a set of vehicle sensors 102, an object detection system 104, an object tracking system 106, object identification system 108, and a depth estimation system 110. Process 300 illustrates an example where an object included in a first image includes an object that has not yet been associated with a unique ID by the object identification system 108. Process 300 also illustrates an example where the object tracking system 106 does not compare a first indication of a first object in the first image to another image (e.g., a second image). The process 300 may occur when the object location determination system is used at inference time. The process 300 may occur when the object location determination system has not previously detected an object in a previous image (e.g., an image received during a drive from a first position to a second position).

At S302, the vehicle sensors 102 may generate information. The information may include a first image. The first image may be captured using one or more cameras on a vehicle. The first image may include one or more objects that the object detection system 104 and/or the object tracking system 106 are capable of indicating are included in the first image. The first image may be transmitted from the vehicle sensors 102 to the object detection system 104.

At S304, the object detection system 104 may process the first image. The first image may be processed as described with respect to the object detection system 104 described in connection with FIG. 2. The object detection system 104 may include one or more machine learning models (e.g., a YOLO model and a modified Mask R-CNN model). The object detection system 104 may generate the first indication of a first object included in the first image (e.g., the indication of the object in the image 210 described with respect to FIG. 2). The first indication of the first object may include a mask and/or a bounding box that is/are mapped to the first object.

In certain embodiments, the object detection system 104 may not detect an object (e.g., the image does not include any objects that the object detection system is configured to detect). In such embodiments, the object detection system 104 may not transmit an indication (e.g., separate from the first indication) to the object tracking system 106 or the object tracking system 106 may transmit a negative indication that indicates no object was detected. In certain embodiments, the object detection system 104 detects more than one object included in the first image. When more than one object is detected, multiple indications of objects included in the first image may be transmitted to the object tracking system 106 (e.g., an indication for each detected object).

At S306, the first image may be transmitted to the object tracking system 106. In the illustrated embodiment, the object tracking system 106 may not have previously received another image from the vehicle sensors 102 and therefore the object tracking system 106 may not perform processing using the first image since the object tracking system 106 may be configured to use two images and an indication of an object included in one of the two images as input to generate an indication of an object in the other of the two images.

At S308, the object detection system 104 may transmit the first indication of the first object included in the first image to the object identification system 108. The object identification system 108 may generate a first feature space representation (e.g., an embedding, a vector representation) of the first indication of the first object included in the first image. The object identification system 108 may compare the first feature space representation with any other feature space representations stored by the object identification system 108.

In the illustrated embodiments, if another indication of an object has not been received by the object identification system 108 or is no longer stored by the object identification system 108, the object identification system 108 will not have anything to compare the first feature space representation with and the object identification system 108 will store the first feature space representation in memory and associate the first feature space representation with a first unique identifier (ID) that is associated with the first object.

In certain embodiment, a previously generated feature space representation of a previously received indication of an object is deleted from memory before the first indication of the first object included in the first image is received by the object identification system 108 and the first feature space representation is not compared with the previously generated feature space representation. The previously generated feature space representation may be deleted from memory of the object identification system 108 for one or more reasons. In certain embodiments, the previously generated feature space representation may be deleted from memory because it has remained in memory past a threshold period of time, it was generated using an image that was captured past a threshold period of time, and/or it was generated during a previous drive of the vehicle, etc.

At S310, the first object feature representation may be stored by the object identification system 108. The first object feature representation may be stored in memory and associated with a unique identifier. The unique identifier may be associated with the first object represented by the first feature representation. In certain embodiments, a time to live for the first object feature representation is set when the first object feature representation is stored in memory. The first object feature representation may be stored in memory to be compared with subsequently generated object feature representations generated based on indications of the first object and/or other objects included in the first image and/or other images.

Storing the first object feature representation can enable the object identification system 108 to determine the first object was in two different image frames (e.g., image frame 1 and image frame 5) even if the object tracking system 106 lost track of the first object between the two different image frames. The object tracking system 106 may lose track of the first object between the two different image frames because of an occlusion, the first object leaving the frame, and/or glare from lighting, etc. Continuing the example, since a Re3 model may be configured to receive a fourth image frame and a fifth image frame, the Re3 model may lose track of the first object if the first object is not shown by the fourth image frame. In certain embodiments, the object tracking system 106 may lose track of the first object between the two different image frames if the object detection generated a negative indication of an object included in an image frame.

In certain embodiments, the object identification system 108 stores an image or a portion of the image that is used to generate a feature space representation that is associated with a unique identifier. The image or the portion of the image may be used by the object tracking system 106 when the object detection system 104 does not detect an object in an image. For example, the object detection system 104 may not detect an object in a second image frame, a third image frame, and a fourth image frame, so when object tracking system 106 may receive a fifth image and a first image frame to generate an indication of the first object included in the fifth image. The first image frame, the second image frame, the third image frame, the fourth image frame, and the fifth image frame may be captured in consecutive order and the object detection system 104 may be configured to process them in the consecutive order.

At S312, the unique identifier of the first object may be transmitted to the depth estimation system 110. The unique identifier of the first object may be transmitted to the depth estimation system 110 so that the depth estimation system 110 can cause the unique identifier of the first object to be associated with a location that may be determined for the first object. Associating the unique identifier of the first object with the location of the first object can assist in tracking the location of the first object over time. In certain embodiments, the object identification system 108 may transmit the first indication of the first object included in the first image to the depth estimation system 110.

At S314, the first indication of the first object included in the first image may be transmitted from the object identification system 108 to the depth estimation system 110. The first indication of the first object may be used by the depth estimation system 110 to determine a distance of the first object from the vehicle and/or the vehicle sensor(s) 102 used to capture the first image. The first indication of the first object included in the first image may be transmitted from the object detection system 104 to the depth estimation system 110 because the object tracking system may not have generated a separate indication of the first object included in the first image for the reasons described above (e.g., the inputs that the object tracking system 106 may use may not have been available).

At S316, the first image may be transmitted from the vehicle sensors 102 to the depth estimation system 110. The depth estimation system 110 may use the first image and the first indication of the first object in the first image to determine a depth estimate of the object mapped to the first indication of the first object included in the first image.

At S318, vehicle location information may be transmitted from one or more of the vehicle sensors 102 to the depth estimation system 110. The vehicle location information may include a GPS coordinate of the vehicle. The vehicle location information may include vehicle location information that represents the vehicle location of the vehicle the vehicle sensors 102 are included in/on at the time and/or near the time the first image was captured.

At S320, the depth estimation system 110 may use the vehicle location information, the first image, and/or the first indication of the first object included in the first image to generate a first location of the first object. The depth estimation system 110 may determine how far and/or in which direction an object included in the first image and mapped with the first indication of the first object included in the first image is from the vehicle. The depth estimation system 110 may determine a location of the first object based on the vehicle location information and the distance and direction to the object.

In certain embodiments, the depth estimation system 110 may include a machine learning model. The machine learning model may be trained to perform monocular depth estimation. The machine learning model may include a MONODEPTH model. The MONODEPTH model may use an image (e.g., a two-dimensional image) as input and generate a corresponding pixel-wide depth map (i.e., a disparity map) of dimensions matching the input image (e.g., a driving scene). A disparity value can be encoded for each pixel in the input image. The disparity map can be converted into a unit distance provided a focal length of a camera. The focal length of the camera may be defined (e.g., based on information received from a camera supplier, based on camera calibration, etc.) and known or obtainable (e.g., via a query) by the depth estimation system 110. An outline of individual objects (such as, a vehicle) may be obtained (e.g., from the object detection system 104 and/or the object tracking system 106) that include pixels used for estimating object depth from a camera.

The first object location may be transmitted to memory for storage. The first object location may be associated with a time the first image was captured and/or a time the first object location was stored in memory. The first object location may be stored so that it can be analyzed subsequently (e.g., after an accident). The first object location may be used to present an indication of a path, route, and/or position of the object over time. Storing the location of the first object over time can enable the location to be analyzed to determine a speed of the first object and/or a direction of travel of the first object.

Steps S304, 308, 310, 312, 314, and 320 may be performed for each object that the object detection system 104 and/or the object tracking system 106 indicates is included in the first image. Accordingly, object locations for multiple objects included in the first image may be generated by the depth estimation system 110 and may be used to track the location of the objects over time.

Although a "drive" is described for simplicity of explanation and since a vehicle may include other types of vehicles that do not drive, such as a plane, other forms of vehicle travel may also occur during capturing the first image and/or other images. In certain embodiments, the first image is analyzed using the object location determination system while the vehicle is traveling. In certain embodiments, the first image is analyzed using the object location determination system at some time after the first image is captured (e.g., after a condition such as a crash occurs, after travel is finished). In certain embodiments, the object detection system 104, the object tracking system 106, the object identification system 108, and/or the depth estimation system 110 are remote (e.g., executed on a remote server) from the vehicle sensors.

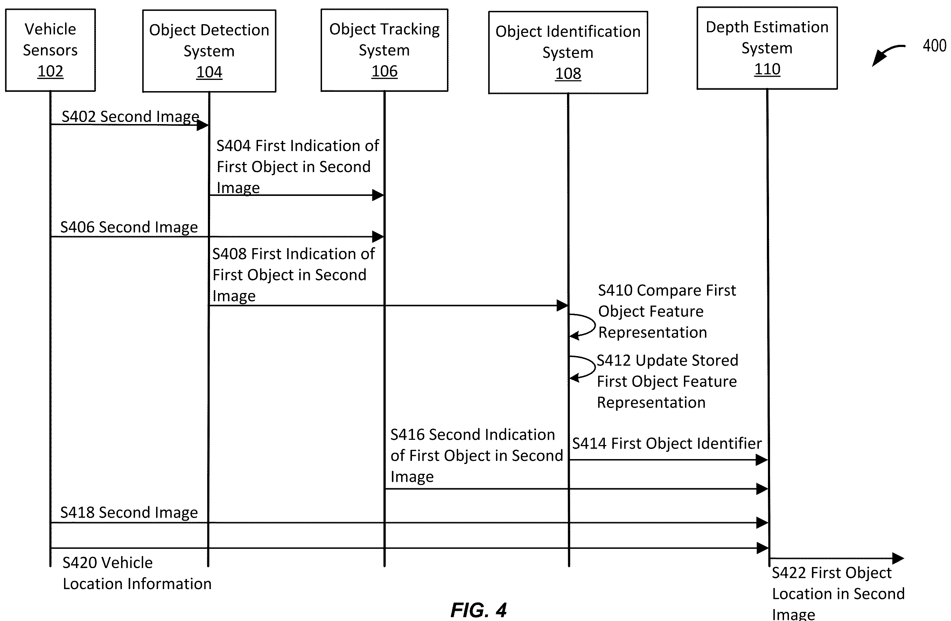

FIG. 4 illustrates a second example process 400 performed by an object location determination system (e.g., object location determination system 100 described above with respect to FIGS. 1 and/or 3), according to certain embodiments. As described above, the object location determination system may include a set of vehicle sensors 102, an object detection system 104, an object tracking system 106, object identification system, and a depth estimation system 110. Process 400 illustrates an example where an object included in a second image includes an object that has already been associated with a unique ID by the object identification system 108. Process 400 also illustrates an example where the object tracking system 106 compares an indication of a first object in an image to another image. The process 400 may occur when the object location determination system is used at inference time. The process 400 may occur when the object location determination system has previously detected an object in a previous image (e.g., a first image received during a same drive of the vehicle from a first position to a second position) as the second image. The process 400 may be performed after process 300 has been performed.

At S402, the vehicle sensors 102 may generate information. The information may include a second image. This image is referred to as a second image since a first image may have already been generated by the vehicle sensors 102 prior to generation of the second image (e.g., see process 300). The second image may be captured using one or more cameras on and/or in the vehicle. The second image may include one or more objects. An indication of the one or more objects (e.g., a bounding box and/or a mask) can be generated by the object detection system 104 and/or the object tracking system 106. The second image may be transmitted from the vehicle sensors 102 to the object detection system. The second image may include a first object that was included in a first image (e.g., the first object included in the first image described with respect to process 300).

At S404, the object detection system 104 may process the second image. The second image may be processed as described with respect to the object detection system 104 described in connection with FIG. 3. The object detection system 104 may generate a first indication of a first object included in the second image. The first indication of the first object may include a mask and/or a bounding box that is/are mapped to the first object.

At S406, the second image may be transmitted to the object tracking system 106. In certain embodiments, the second image is transmitted to the object tracking system 106 because an image (e.g., the first image) was previously transmitted from the object detection system 104 to the object tracking system 106.

At S408, the object detection system 104 may transmit the first indication of the first object included in the second image to the object identification system 108. The object identification system 108 may generate a feature space representation (e.g., an embedding, a vector representation) of the first indication of the first object included in the first image.

At S410, the object identification system 108 may compare the feature space representation with any other feature space representations previously stored by the object identification system 108. The feature space representation of the object may be used to look up a unique identifier of the object by determining which stored feature space representation associated with a unique identifier is sufficiently similar (e.g., close in the feature space) to the feature space representation. If the feature space representation of the object is outside of a threshold similarity to other feature space representations stored by the object identification system 108, the object identification system 108 may generate a new, unique identifier for the object and associate the unique identifier with the feature space representation (e.g., similar to step S310 described above).

In the illustrated embodiment, a previously generated and stored feature space representation (e.g., a feature space representation of the first object described with respect to process 300) of a previously received indication (e.g., the first indication of the first object included in the first image transmitted at step S308) of an object is stored by the object identification system 108. The object identification system 108 may compare the feature space representation with one or more other feature space representations stored by the object identification system 108.

In the illustrated embodiment, the feature space representation is for the first object included in the second image. The first object may have been included in the first image and already used to generate a previously stored feature space representation that was previously associated with a unique identifier of the first object and stored by the object identification system 108. The object identification system may compare the stored feature space representation of the first object and the feature space representation of the first object included in the second image. The object identification system 108 may determine that the stored feature space representation and the feature space representation of the first object included in the second image are for the same object because they are sufficiently similar. The similarity may be based on a threshold distance between the feature space representations being compared.

The object identification system 108 may include a Deep SORT model. The Deep SORT model may iteratively update its definitions of objects by updating the feature space representation associated with the object and a unique ID. This updating may occur as frequently as images are obtained. The updating may occur at a frequency that is less than the frequency at which images are obtained. For example, an object may be occluded for one or more frames between the updating of the feature space representation of an object. The object identification system 108 can enable an object to be identified and tracked across images/time. The object identification system 108 can enable an object to be tracked when the object tracking system 106 fails and/or is expected to be unreliable.

Deep SORT may use a convolutional neural network (CNN) for generating a custom feature representation of an object in an image, and may use a feature matching scheme along with a KALMAN filtering in an image space and frame-by-frame data association using the KALMAN algorithm. Deep SORT can be used to assign IDs for detected individual objects for matching across video frames. Deep SORT can be used for object-level identification, but may not be used to track an object across frames. Deep SORT may rely on visual object information (e.g., an image crop of the object across video frames) provided to it to perform a matching operation.

At S412, after determining that the feature space representation is for the same object as the previously stored feature space representation, the feature space representation of the object may be associated with the unique identifier of the first object instead of the previously stored feature space representation. The feature space representation may be associated with the unique identifier because it more closely represents the object at the time the second image was captured compared to when the first image was captured. For example, in the first image, the first object may have been slightly turned away from the vehicle sensors compared to the second image of the object. Updating the feature space representation of an object over time can enable an object to be presented by an image differently over time while also enabling the object to be associated with the same unique identifier of the object. The updating can allow for incremental changes of an object's feature space representation to change over time while still being associated with the same unique identifier of the object.

At S414, the unique identifier of the first object may be transmitted to the depth estimation system 110. The unique identifier may be the same unique identifier that was associated with the first object at step S312 described above. The unique identifier of the first object may be transmitted to the depth estimation system 110 so that the depth estimation system 110 can cause the unique identifier of the first object to be associated with a location that may be determined for the first object. Associating the unique identifier of the first object with the location of the first object can assist in tracking the location of the first object over time.

At S416, a second indication of the first object included in the second image may be transmitted from the object tracking system 106 to the depth estimation system 110. The second indication may be generated by the object tracking system 106 based on the second image received at step S406, another image (e.g., first image received at step S306), and an indication of an object included in the other image (e.g., the first indication of the first object included in the first image received at step S304). The object tracking system 106 may include a machine learning model. The machine learning model may include a real-time recurrent regression tracker. The machine learning model may include a Re3 model which is also referred to as Real-Time Recurrent Regression Networks for Visual Tracking of Generic Objects.

At S418, the second image may be transmitted from the vehicle sensors to the depth estimation system 110. In the illustrated embodiment, the object tracking system 106 may have previously received another image (e.g., the first image described with respect to process 300) from the vehicle sensors and the object tracking system 106 may perform processing using the second image since the object tracking system 106 may be configured to use two images and an indication of an object included in one of the two images as input to generate an indication of an object in the other of the two images. The object tracking system 106 may use a previously received image (e.g., the first image), the second image, and the indication of the first object included in the second image to generate a second indication of the first object included in the second image.

At S420, vehicle location information may be transmitted from one or more of the vehicle sensors to the depth estimation system 110. The vehicle location information may include a GPS coordinate of the vehicle. The vehicle location information may include vehicle location information that represents the location of the vehicle the vehicle sensors are included in/on at the time and/or near the time the second image was captured. The vehicle location information may include a travel direction of the vehicle. In certain embodiments, the information about the sensor position and/or orientation is transmitted from the vehicle sensors to the depth estimation system so that the depth estimation position can use the sensor position and/or orientation to inform where an object is with respect to the sensor.

At S422, the depth estimation system 110 may use the vehicle location information from step S420, the second image, and/or the second indication of the first object included in the second image to generate a second location of the first object. The depth estimation system 110 may determine how far and/or in which direction an object included in the second image and mapped with the second indication of the first object included in the second image is from the vehicle. The depth estimation system 110 may determine the second location of the first object based on the vehicle location information and the distance and direction to the object. The depth estimation system 110 may use the second image and the second indication of the first object in the second image to determine a depth estimate of the object mapped to the second indication of the first object included in the second image.

In certain embodiments, the depth estimation system 110 receives the first indication of the first object included in the second image and uses the first indication to determine the depth estimate of the object included in the second image. The depth estimation system 110 may use the first indication instead of the second indication based on a confidence value associated with the first indication (e.g., confidence value generated by the object detection system 104). In certain embodiments, other factors are considered such as whether the object identification system 108 uses the first indication of the first object included in the second image or the second indication of the first object included in the second image. In certain embodiments, the first indication generated by the object detection system 104 can be used to verify the second indication generated by the object tracking system 106. In certain embodiments, the second indication generated by the object tracking system 106 can be used to verify the first indication generated by the object detection system 104.

In certain embodiments, instead of the object identification system 108 using the first indication of the first object included in the second image received at step S408 to determine the first object identifier, the object identification system 108 uses the second indication of the first object in the second image generated by the object tracking system 106 to determine the first object identifier.

The first object location may be transmitted to memory for storage. The first object location may be associated with a time the second image was captured and/or a time the second object location was stored in memory. The second object location may be stored so that it can be analyzed subsequently (e.g., after an accident). The second object location may be used to present an indication of a path, route, and/or position of the first object over time. Storing the second location of the first object over time can enable the location to be analyzed to determine a speed of the first object and/or a direction of travel of the first object.

Steps S404, 408, 410, 412, 414, and 416, and 422 may be performed for each object that the object detection system 104 and/or the object tracking system 106 indicates is included in the second image. Accordingly, object locations for multiple objects included in the second image may be generated by the depth estimation system 110 and may be used to track the location of the objects over time.

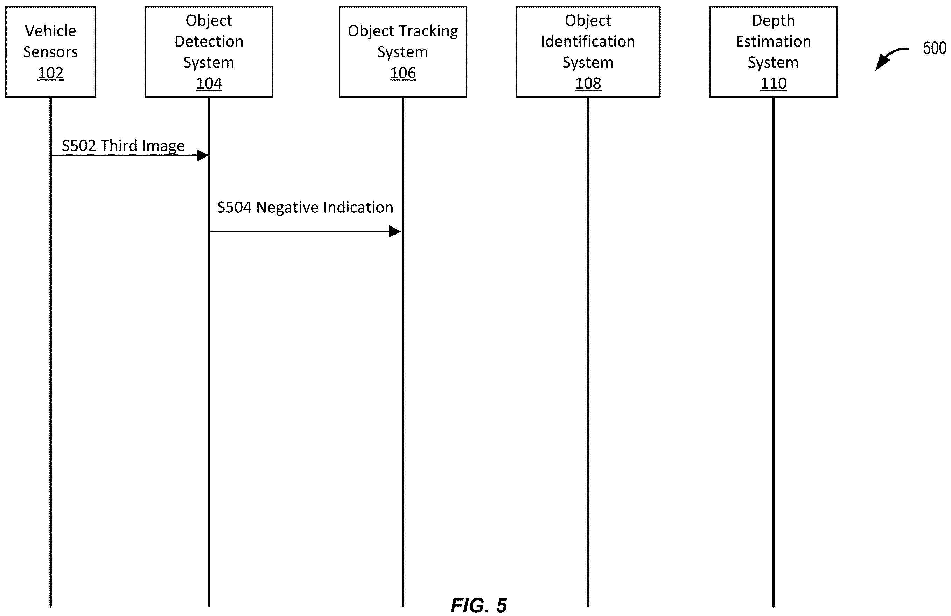

FIG. 5 illustrates a third example process 500 performed by an object location determination system (e.g., object location determination system 100 described above), according to certain embodiments. As described above, the object location determination system may include a set of vehicle sensors 102 (e.g., vehicle sensors 102 described above), an object detection system 104, an object tracking system 106, object identification system 108, and a depth estimation system 110. Process 500 illustrates an example where an object is not detected by the object detection system 104. Process 500 may occur when the object location determination system is used at inference time. Process 500 may occur when the object location determination system has not previously detected an object in a previous image (e.g., an image received during a drive from a first position to a second position) and/or when a previously detected object goes out of sensing range of the vehicle sensors. Process 500 may occur when the object location determination system has previously detected an object in a previous image (e.g., a first image received during the drive of the vehicle from the first position to the second position as a third image). The process 500 may be performed after process 300 and/or 400 has been performed. Process 500 may occur after capturing the third image and after capturing one or more other images (which may have included objects detectable by the object detection system 104). Process 500 may occur after capturing the third image and before capturing one or more other images (which may include objects detectable by the object detection system 104).

At S502, the vehicle sensors may generate information. The information may include the third image. This image is referred to as a third image since a first image and a second image may have already been generated by the vehicle sensors prior to generation of the third image (e.g., see process 300 and process 400). The third image may be captured using one or more cameras on and/or in the vehicle. The third image may include no objects or may include objects (e.g., an image of an empty sky, an image captured by a snow covered camera, etc.) that the object detection system 104 is not configured to include in an indication of an object (e.g., a stationary sign may not be detected) included in the third image. The third image may be transmitted from the vehicle sensors to the object detection system 104.

At S504, the object detection system 104 may process the third image. The third image may be processed as described with respect to the object detection system 104 described in connection with FIGS. 2-4. The object detection system 104 may generate a negative indication of an object included in the third image. In certain embodiments, the image includes no objects detectable by the object detection system 104 and the object detection system 104 generates an indication that no objects were detected (e.g., the negative indication).

At S506, a negative indication may be transmitted from the object detection system 104 to the object tracking system 106. The object tracking system 106 may not process the third image and/or generate an indication when the negative indication is received.

In certain embodiments, when no objects are detected by the object detection system 104, no indication of objects included in the image is generated by the object detection system 104 and the lack of the indication of objects serves as an indication that no objects were detected.

In certain embodiments, the object detection system 104 provides the negative indication to the object tracking system 106 when an object that should have been detected by the object detection system 104 is included in the third image. In such embodiments, the object tracking system 106 may use a previous indication received from the object detection system 104, a previous image received from the object detection system 104, and the third image to generate an indication of an object included in the third image. Accordingly, embodiments enable the object tracking system 106 to generate an indication that an object is included in an image even when the object detection system 104 does not generate an indication of the object.

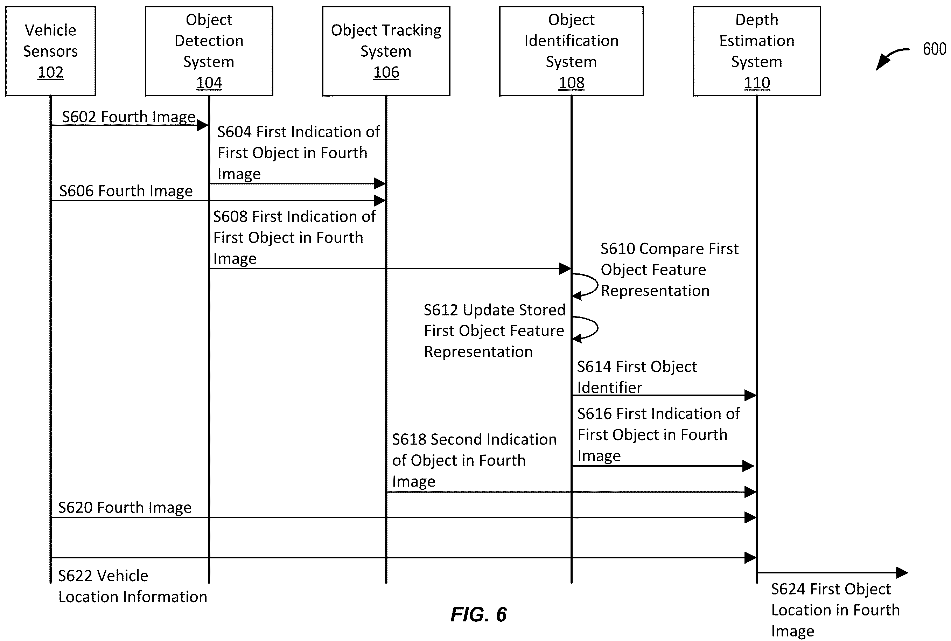

FIG. 6 illustrates a fourth example process 600 performed by an object location determination system (e.g., object location determination system 100 described above with respect to FIGS. 1 and/or 3), according to certain embodiments. As described above, the object location determination system may include a set of vehicle sensors 102, an object detection system 104, an object tracking system 106, object identification system 108, and a depth estimation system 110.

Process 600 illustrates an example where an object included in a fourth image includes an object that has already been associated with a unique ID by the object identification system 108. Process 600 also illustrates an example where the object tracking system 106 compares an indication of a first object in an image to another image and may not generate a reliable second indication. Process 600 may occur when the object location determination system is used at inference time. Process 600 may occur when the object location determination system has previously detected an object in an image captured (e.g., a first image received during a same drive of the vehicle from a first position to a second position) prior to the fourth image. Process 600 may be performed after process 300, 400, and/or 500 has been performed. Process 600 illustrates a process where the fourth image captures an image of an object that was not detected in a third image (e.g., the third image transmitted at step S302) captured before the fourth image and also after the object was detected using an image captured before the third image (e.g., the second image transmitted at step S402).

At S602, the vehicle sensors may generate information. The information may include a fourth image. This image is referred to as a fourth image since a first image, second image, and third image may have already been generated by the vehicle sensors prior to generation of the fourth image (e.g., see process 300, 500, and 500). The fourth image may be captured using one or more cameras on and/or in the vehicle. The fourth image may include one or more objects that the object detection system 104 and/or the object tracking system 106 are capable of indicating are included in the fourth image. The fourth image may be transmitted from the vehicle sensors to the object detection system 104. The fourth image may include a first object that was included in a second image (e.g., the first object included in the second image described with respect to process 400).

At S604, the object detection system 104 may process the fourth image. The fourth image may be processed as described with respect to the object detection system 104 described in connection with FIG. 3. The object detection system 104 may generate a first indication of a first object included in the fourth image. The first indication of the first object may include a mask and/or a bounding box that is/are mapped to the first object.

At S606, the fourth image may be transmitted to the object tracking system 106. In certain embodiments, the fourth image is transmitted to the object tracking system 106 because an image (e.g., the fourth image) was previously transmitted from the object detection system 104 to the object tracking system 106.

At S608, the object detection system 104 may transmit the first indication of the first object included in the fourth image to the object identification system 108. The object identification system 108 may generate a feature space representation (e.g., an embedding, a vector representation) of the first indication of the first object included in the fourth image.

At S610, the object identification system 108 may compare the feature space representation with any other feature space representations stored by the object identification system 108. The feature space representation of the object may be used to look up a unique identifier of the object by determining which stored feature space representation associated with a unique identifier is sufficiently similar (e.g., close in the feature space) to the feature space representation. Step S610 may perform similar processing to step S410 described above. In certain embodiments, S610 may cause the object identification system 108 to compare the feature space representation generated using the first indication of the first object included in the fourth image with the feature space representation generated based on the first indication of the first object included in the second image generated and stored during process 400.

At S612, after determining the feature space representation is for the same object as a stored feature space representation, the feature space representation of the object may be associated with the unique identifier of the first object instead of the previously stored feature space representation. Step S612 may perform similar processing to step S412 described above. In certain embodiments, S612 may cause the object identification system to store the feature space representation generated using the first indication of the first object included in the fourth image in place of the feature space representation generated and stored based on the first indication of the first object included in the second image generated during process 400.

At S614, the unique identifier of the first object may be transmitted to the depth estimation system 110. The unique identifier may be the same unique identifier that was associated with the first object at step S312 and S412 described above. Step S614 may perform similar processing to step S414 described above.

At S616, a first indication of the first object included in the fourth image may be transmitted from the object identification system 108 to the depth estimation system 110. In certain embodiments, the first indication of the first object included in the fourth image may be transmitted from the object detection system 104 to the depth estimation system 110. The first indication of the first object included in the fourth image may be transmitted to and/or used by the depth estimation system 110 to generate first object location in the fourth image when the object tracking system 106 is unable to generate a second indication of the object included in the fourth image and/or when the second indication of the object included in the fourth image is expected to be inaccurate. In certain embodiments, when an object was not in a third image (e.g., the third image transmitted at step S302), the third image may be used by the object tracking system 106 to generate the second indication of the object included in the fourth image, but the indication may be expected to be inaccurate. The indication may be expected to be inaccurate because of how the Re3 model is expected to perform under such conditions.

At S618, the object tracking system 106 may transmit the second indication of the object included in the fourth image to the depth estimation system 110. The second indication of the object included in the fourth image may be generated based on the fourth image, a previous image, and an indication of the object included in the previous image.

At S620, the fourth image may be transmitted from the vehicle sensors to the depth estimation system 110. Step S620 may perform similar processing as step S418 described above.

At S622, vehicle location information may be transmitted from one or more of the vehicle sensors to the depth estimation system 110. Step S622 may perform similar processing as step S420 described above.

At S624, the depth estimation system 110 may generate the first object location included in the fourth image based on the fourth image, the vehicle location information, the first object identifier, and/or the first indication of the first object included in the fourth image. Step S624 may perform similar processing as step S422 and/or 320 described above.

Steps S604, 608, 610, 612, 614, and 616, 618, and 624 may be performed for each object that the object detection system 104 and/or the object tracking system 106 indicates is included in the fourth image. Accordingly, object locations for multiple objects included in the fourth image may be generated by the depth estimation system 110 and may be used to track the location of the objects over time.

In certain embodiments, when the object tracking system 106 maintains an object indication across frames and the object detection system 104 fails to generate an indication of the object, the object indication may be used as a ground truth to further train the object detection system 104. Such embodiments can enable the system to include a feedback-driven improvement loop that continually adapts to specific conditions encountered in data obtained from the vehicle sensors. In certain embodiments, the object detection system 104, the object identification system 108, the object tracking system 106, and/or the depth estimation system 110 are trained and/or fine tuned using common training data.

The embodiments described herein can enable a pipeline to be configured so that components can solve problems that may exist with the other components. For example, an object detection model can be great for detecting an object included in a single frame, but the object detection model may not enable association of objects between frames. The object identification system 108 and the object tracking system 106 can resolve such issues. As another example, models like Deep SORT and YOLO may not track objects consistently across images, the object tracking system 106 may be used to resolve such issues. Re3 may not recapture/re-indicate object existence after the objects are lost track of (e.g., due to an occlusion or the object leaving the frame). Such issues can be addressed using the object identification system 108. As another example, Deep SORT may fail at mapping unique IDs to feature space representations, embodiments herein can provide validation to resolve such issues.

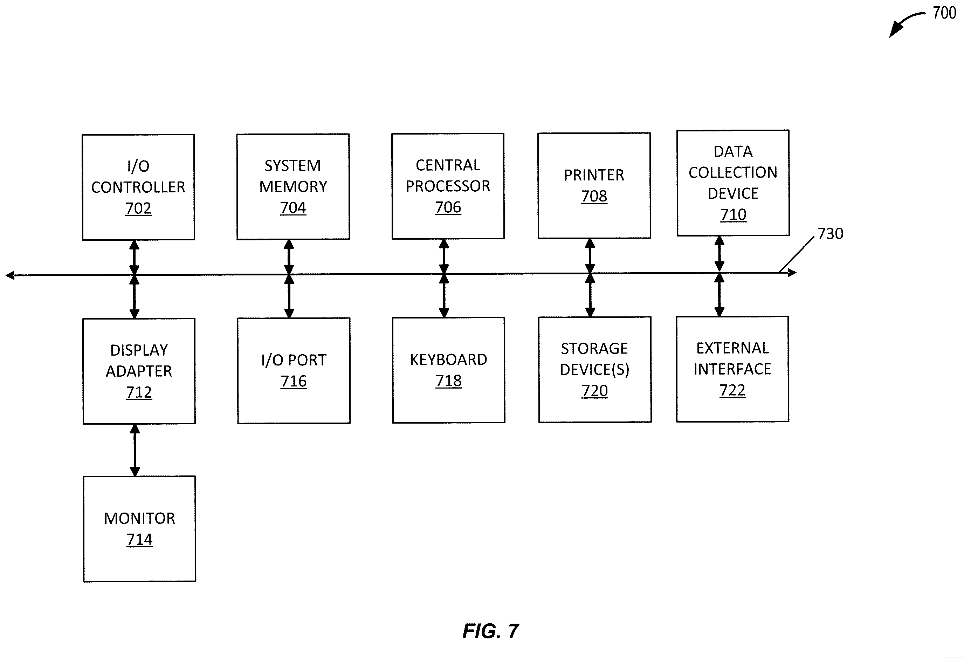

FIG. 7 illustrates a block diagram of an exemplary computer apparatus according to certain embodiments.

Any of the computer systems mentioned herein may utilize any suitable number of subsystems. Examples of such subsystems are shown in FIG. 7 in computer system 700. In some embodiments, a computer system includes a single computer apparatus, where the subsystems can be the components of the computer apparatus. In other embodiments, a computer system can include multiple computer apparatuses, each being a subsystem, with internal components. A computer system can include desktop and laptop computers, tablets, mobile phones and other mobile devices.

The subsystems shown in FIG. 7 are interconnected via a system bus 730. Additional subsystems such as a printer 708, keyboard 718, storage device(s) 720, monitor 714 (e.g., a display screen, such as an LED), which is coupled to display adapter 712, and others are shown. Peripherals and input/output (I/O) devices, which couple to I/O controller 702, can be connected to the computer system by any number of means known in the art such as input/output (I/O) port 716 (e.g., USB, FireWire^{®}). For example, I/O port 716 or external interface 722 (e.g., Ethernet, Wi-Fi, etc.) can be used to connect computer system 700 to a wide area network such as the Internet, a mouse input device, or a scanner. The interconnection via system bus 730 allows the central processor 706 to communicate with each subsystem and to control the execution of a plurality of instructions from system memory 704 or the storage device(s) 720 (e.g., a fixed disk, such as a hard drive, or optical disk), as well as the exchange of information between subsystems. The system memory 704 and/or the storage device(s) 720 may embody a computer readable medium. Another subsystem is a data collection device 710, such as a camera, microphone, accelerometer, and the like. Any of the data mentioned herein can be output from one component to another component and can be output to the user.

A computer system can include a plurality of the same components or subsystems, e.g., connected together by external interface 722, by an internal interface, or via removable storage devices that can be connected and removed from one component to another component. In some embodiments, computer systems, subsystem, or apparatuses can communicate over a network. In such instances, one computer can be considered a client and another computer a server, where each can be part of a same computer system. A client and a server can each include multiple systems, subsystems, or components. In various embodiments, methods may involve various numbers of clients and/or servers, including at least 10, 20, 50, 100, 200, 500, 1,000, or 10,000 devices. Methods can include various numbers of communication messages between devices, including at least 100, 200, 500, 1,000, 10,000, 50,000, 100,000, 500,00, or one million communication messages. Such communications can involve at least 1 MB, 10 MB, 100 MB, 1 GB, 10 GB, or 100 GB of data.

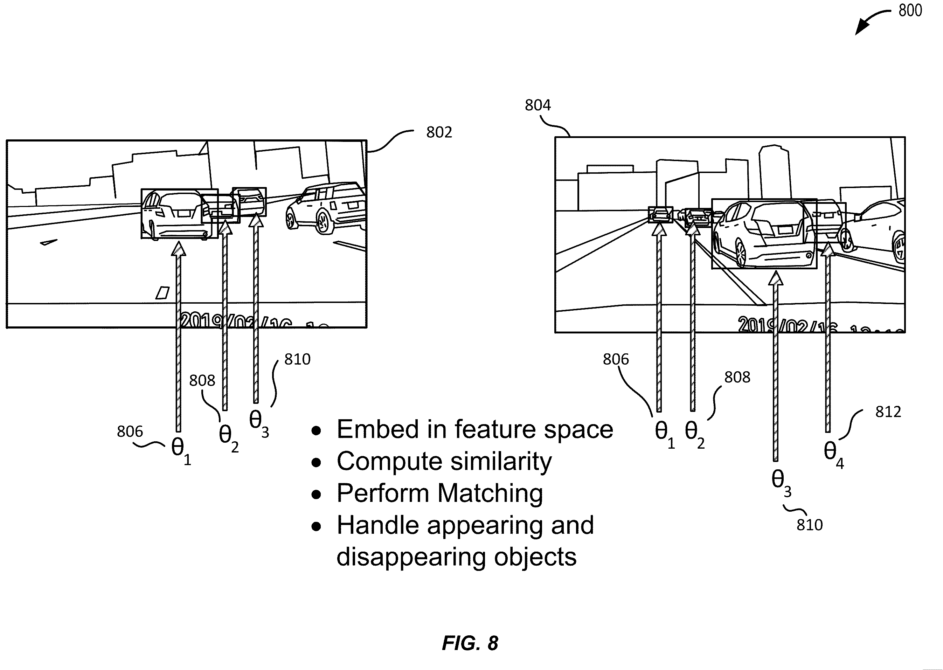

FIG. 8 illustrates an example of vehicle tracking at two different times, according to certain embodiments. In FIG. 8, left panel 802 takes place chronologically earlier than right panel 804. The left panel 802 may include a first image captured before a second image included in the right panel 804.

In panel 802, three vehicles, 806, 808, and 810 have been identified and may be tracked. In order to do so, data for the vehicles must be embedded in a feature space, a computation of similarity may be made (e.g., by an object identification system 108 described above), a match performed, and appearing and disappearing objects may be handled.

Referring to panel 804, vehicles 806 and 808 have moved further away and vehicle 810 is now closer. Vehicle 812 is new and has appeared as a new vehicle.

To track vehicles, unique IDs may be assigned to detected objects. As previously described and in some implementations, the described approach can use a frame-by frame object association with iterative KALMAN filtering. The described approach is robust to appearance change and periods (e.g., short periods, long periods) of occlusion. Additionally, the approach can remember objects, and may find the objects in a video frame using the object detection system (e.g., object detection system 104 described above).

A summary of the various embodiments of the invention is provided below as a list of examples. As used below, any reference to a series of examples is to be understood as a reference to each of those examples disjunctively (e.g., "Examples 1-4" is to be understood as "Examples 1, 2, 3, or 4").

Example 1 is a method comprising: detecting, based at least in part on a first image obtained at a first time, a first indication of a first object included in the first image obtained using a vehicle sensor; generating, based at least in part on the first indication, a first feature space representation of the first object included in the first image; comparing the first feature space representation of the first object with a set of stored feature space representations; responsive to the comparing: assigning a first unique identifier to the first feature space representation; generating, based on the first indication, a first distance of the first object from the vehicle sensor; and associating the first distance, the first unique identifier, and the first time in memory.

Example 2 is the method of example 1, wherein the first indication includes at least a bounding box around the first object or a pixel-wise mask for the first object.

Example 3 is the method of example 2, wherein the first indication includes the bounding box and the pixel-wise mask.

Example 4 is the method of example 1, wherein the first indication is generated using a You Only Look Once (YOLO) model and a portion of a Mask-Recurrent Neural Network (RCNN) model.

Example 5 is the method of example 4, wherein the YOLO model generates a confidence score associated with a bounding box.

Example 6 is the method of example 1, wherein the first indication is generated using a Re3 model.

Example 7 is the method of example 1, wherein the first indication is generated using a You Only Look Once (YOLO) model, a portion of a Mask-Recurrent Neural Network (RCNN) model, and a Re3 model.

Example 8 is the method of example 1, wherein assigning the first unique identifier comprises generating the first unique identifier, wherein the first unique identifier does not match a unique identifier already associated with the set of stored feature space representations.

Example 9 is the method of example 1, wherein assigning the first unique identifier comprises assigning a unique identifier that was associated with a stored feature space representation included in the set of stored feature space representations to the first feature space representation.

Example 10 is the method of example 1, further comprising: detecting, based at least in part on a second image obtained at a second time, a second indication of the first object included in the second image obtained using the vehicle sensor; generating, based at least in part on the second indication, a second feature space representation of the first object included in the second image; comparing the second feature space representation of the first object with the first feature space representation of the first object; responsive to the comparing: assigning the first unique identifier to the second feature space representation; generating, based on the second indication, a second distance of the first object from the vehicle sensor; and associating the second distance, the first unique identifier, and the second time in memory.

Example 11 is the method of example 1, further comprising: detecting, based at least in part on the first image obtained at the first time, a second indication of a second object included in the first image obtained using the vehicle sensor; generating, based at least in part on the second indication, a second feature space representation of the second object included in the first image; comparing the second feature space representation of the second object with the set of stored feature space representations; responsive to the comparing: assigning a second unique identifier to the first feature space representation; generating, based on the second indication, a second distance of the second object from the vehicle sensor; and associating the second distance, the second unique identifier, and the first time in memory.

Example 12 is a system comprising: one or more storage media storing instructions; and one or more processors configured to execute the instructions to cause the system to perform operations comprising: detecting, based at least in part on a first image obtained at a first time, a first indication of a first object included in the first image obtained using a vehicle sensor; generating, based at least in part on the first indication, a first feature space representation of the first object included in the first image; comparing the first feature space representation of the first object with a set of stored feature space representations; responsive to the comparing: assigning a first unique identifier to the first feature space representation; generating, based on the first indication, a first distance of the first object from the vehicle sensor; and associating the first distance, the first unique identifier, and the first time in memory.

Example 13 is the system of example 12, wherein the first indication includes at least a bounding box around the first object or a pixel-wise mask for the first object.

Example 14 is the system of example 13, wherein the first indication includes the bounding box and the pixel-wise mask.

Example 15 is the system of example 12, wherein the first indication is generated using a You Only Look Once (YOLO) model and a portion of a Mask-Recurrent Neural Network (RCNN) model.

Example 16 is the system of example 15, wherein the YOLO model generates a confidence score associated with a bounding box.

Example 17 is the system of example 12, wherein the first indication is generated using a Re3 model.

Example 18 is the system of example 12, wherein the first indication is generated using a You Only Look Once (YOLO) model, a portion of a Mask-Recurrent Neural Network (RCNN) model, and a Re3 model.

Example 19 is the system of example 12, wherein assigning the first unique identifier comprises generating the first unique identifier, wherein the first unique identifier does not match a unique identifier already associated with the set of stored feature space representations.

Example 20 is the system of example 12, wherein assigning the first unique identifier comprises assigning a unique identifier that was associated with a stored feature space representation included in the set of stored feature space representations to the first feature space representation.

Example 21 is the system of example 12, wherein the instructions cause the system to perform operations further comprising: detecting, based at least in part on a second image obtained at a second time, a second indication of the first object included in the second image obtained using the vehicle sensor; generating, based at least in part on the second indication, a second feature space representation of the first object included in the second image; comparing the second feature space representation of the first object with the first feature space representation of the first object; responsive to the comparing: assigning the first unique identifier to the second feature space representation; generating, based on the second indication, a second distance of the first object from the vehicle sensor; and associating the second distance, the first unique identifier, and the second time in memory.

Example 22 is the system of example 12, wherein the instructions cause the system to perform operations further comprising: detecting, based at least in part on the first image obtained at the first time, a second indication of a second object included in the first image obtained using the vehicle sensor; generating, based at least in part on the second indication, a second feature space representation of the second object included in the first image; comparing the second feature space representation of the second object with the set of stored feature space representations; responsive to the comparing: assigning a second unique identifier to the first feature space representation; generating, based on the second indication, a second distance of the second object from the vehicle sensor; and associating the second distance, the second unique identifier, and the first time in memory.

Example 23 is one or more non-transitory computer-readable storage media storing instructions that, upon execution by one or more processors of a system, cause the system to perform operations comprising: detecting, based at least in part on a first image obtained at a first time, a first indication of a first object included in the first image obtained using a vehicle sensor; generating, based at least in part on the first indication, a first feature space representation of the first object included in the first image; comparing the first feature space representation of the first object with a set of stored feature space representations; responsive to the comparing: assigning a first unique identifier to the first feature space representation; generating, based on the first indication, a first distance of the first object from the vehicle sensor; and associating the first distance, the first unique identifier, and the first time in memory.

Example 24 is the non-transitory computer-readable storage media of example 23, wherein the first indication includes at least a bounding box around the first object or a pixel-wise mask for the first object.

Example 25 is the non-transitory computer-readable storage media of example 24, wherein the first indication includes the bounding box and the pixel-wise mask.

Example 26 is the non-transitory computer-readable storage media of example 23, wherein the first indication is generated using a You Only Look Once (YOLO) model and a portion of a Mask-Recurrent Neural Network (RCNN) model.

Example 27 is the non-transitory computer-readable storage media of example 26, wherein the YOLO model generates a confidence score associated with a bounding box.

Example 28 is the system of example 23, wherein the first indication is generated using a Re3 model.

Example 29 is the non-transitory computer-readable storage media of example 23, wherein the first indication is generated using a You Only Look Once (YOLO) model, a portion of a Mask-Recurrent Neural Network (RCNN) model, and a Re3 model.

Example 30 is the non-transitory computer-readable storage media of example 23, wherein assigning the first unique identifier comprises generating the first unique identifier, wherein the first unique identifier does not match a unique identifier already associated with the set of stored feature space representations.

Example 31 is the non-transitory computer-readable storage media of example 12, wherein assigning the first unique identifier comprises assigning a unique identifier that was associated with a stored feature space representation included in the set of stored feature space representations to the first feature space representation.

Example 32 is the non-transitory computer-readable storage media of example 23, wherein the instructions cause the system to perform operations further comprising: detecting, based at least in part on a second image obtained at a second time, a second indication of the first object included in the second image obtained using the vehicle sensor; generating, based at least in part on the second indication, a second feature space representation of the first object included in the second image; comparing the second feature space representation of the first object with the first feature space representation of the first object; responsive to the comparing: assigning the first unique identifier to the second feature space representation; generating, based on the second indication, a second distance of the first object from the vehicle sensor; and associating the second distance, the first unique identifier, and the second time in memory.

Example 33 is the non-transitory computer-readable storage media of example 23, wherein the instructions cause the system to perform operations further comprising: detecting, based at least in part on the first image obtained at the first time, a second indication of a second object included in the first image obtained using the vehicle sensor; generating, based at least in part on the second indication, a second feature space representation of the second object included in the first image; comparing the second feature space representation of the second object with the set of stored feature space representations; responsive to the comparing: assigning a second unique identifier to the first feature space representation; generating, based on the second indication, a second distance of the second object from the vehicle sensor; and associating the second distance, the second unique identifier, and the first time in memory.

Example 34 is a computer-implemented method, comprising: detecting, for each image frame of a plurality of image frames received from an image device, an initial estimate of image context, wherein the image frame context includes a class of an object in an image frame, a location of the object in the image frame, and a pixel-wise mask for the object in the image frame; generating an internal object representation of the object from an initial image frame of the plurality of image frames; matching, using the internal object representation, the object in a feature space of a next frame of the plurality of image frames; assigning, to the object, an identification for matching across image frames of the plurality of image frames; identifying, using the identification, the object across the plurality of image frames; estimating a three-dimensional distance from the object in an image frame of the plurality of image frames from the image device.

Example 34 and other described implementations can each, optionally, include one or more of the following features:
A first feature, combinable with any of the following features, wherein the plurality of images frames are RGB image frames.

A second feature, combinable with any of the previous or following features, for each image frame of a plurality of image frames, an initial estimate of image frame context, comprises using a YOLO model to generate a bounding box for the object in the image frame, the class of the object in the image frame, and a confidence value for the bounding box and the class.

A third feature, combinable with any of the previous or following features, for each image frame of a plurality of image frames, an initial estimate of image frame context, comprises using a Mask-RCNN model to generate the class of the object in the image frame and the pixelwise mask for the object in the image frame.

A fourth feature, combinable with any of the previous or following features, comprising: storing, for the initial image frame of the plurality of image frames, the internal object representation; and updating, for the next image frame of the plurality of image frames, the internal object representation.

A fifth feature, combinable with any of the previous or following features, comprising: estimating a position of the object in the next frame of the plurality of image frames if a detector fails to detect the object across individual image frames of the plurality of image frames.

A sixth feature, combinable with any of the previous or following features, wherein identifying, using the identification, the object across the plurality of image frames, comprises: receiving an image crop of the object across the plurality of image frames; and matching, using the image crop and the identification, the object in an image frame of the plurality of image frames.

A seventh feature, combinable with any of the previous or following features, comprising: transmitting, from an edge-based model for identifying risky driving events and from a client computing device to a server, a stream of text stream of data instead of a stream of video data for processing by the server.

An eighth feature, combinable with any of the previous or following features, wherein the edge-based model comprises models for tailgating, distraction, and relative vehicular speed.

A ninth feature, combinable with any of the previous or following features, comprising: upon detection, using the edge-based model, of a risky driving event, triggering an upload of a stream of video data to the server for processing.

A tenth feature, combinable ,with any of the previous or following features, comprising: analyzing driving video data to detect a behavior of interest in the driving video data; generating a data model which only requires telematics data to detecting the behavior of interest; detecting, using the data model, the behavior of interest; and determining, based on the detected behavior of interest, a user risk.

In example 36, a non-transitory, computer-readable medium storing one or more instructions executable by a computer system to perform one or more operations, comprising: detecting, for each image frame of a plurality of image frames received from an image device, an initial estimate of image context, wherein the image frame context includes a class of an object in an image frame, a location of the object in the image frame, and a pixel-wise mask for the object in the image frame; generating an internal object representation of the object from an initial image frame of the plurality of image frames; matching, using the internal object representation, the object in a feature space of a next frame of the plurality of image frames; assigning, to the object, an identification for matching across image frames of the plurality of image frames; identifying, using the identification, the object across the plurality of image frames; estimating a three-dimensional distance from the object in an image frame of the plurality of image frames from the image device.

The foregoing and other described examples can each, optionally, include one or more of the following features:
A first feature, combinable with any of the following features, wherein the plurality of images frames are RGB image frames.

A second feature, combinable with any of the previous or following features, for each image frame of a plurality of image frames, an initial estimate of image frame context, comprises using a YOLO model to generate a hounding box for the object in the image frame, the class of the object in the image frame, and a confidence value for the bounding box and the class.

A third feature, combinable with any of the previous or following features, for each image frame of a plurality of image frames, an initial estimate of image frame context, comprises using a Mask-RCNN model to generate the class of the object in the image frame and the pixelwise mask for the object in the image frame.

A fourth feature, combinable with any of the previous or following features, comprising: storing, for the initial image frame of the plurality of image frames, the internal object representation; and updating, for the next image frame of the plurality of image frames, the internal object representation.

A fifth feature, combinable with any of the previous or following features, comprising: estimating a position of the object in the next frame of the plurality of image frames if a detector fails to detect the object across individual image frames of the plurality of image frames.

A sixth feature, combinable with any of the previous or following features, wherein identifying, using the identification, the object across the plurality of image frames, comprises: receiving an image crop of the object across the plurality of image frames; and matching, using the image crop and the identification, the object in an image frame of the plurality of image frames.

A seventh feature, combinable with any of the previous or following features, comprising: transmitting, from an edge-based model for identifying risky driving events and from a client computing device to a server, a stream of text stream of data instead of a stream of video data for processing by the server.

An eighth feature, combinable with any of the previous or following features, wherein the edge-based model comprises models for tailgating, distraction, and relative vehicular speed.

A ninth feature, combinable with any of the previous or following features, comprising: upon detection, using the edge-based model, of a risky driving event, triggering an upload of a stream of video data to the server for processing.

A tenth feature, combinable with any of the previous or following features, comprising: analyzing driving video data to detect a behavior of interest in the driving video data; generating a data model which only requires telematics data to detecting the behavior of interest; detecting, using the data model, the behavior of interest; and determining, based on the detected behavior of interest, a user risk

Example 37 includes a computer-implemented system, comprising: one or more computers; and one or more computer memory devices interoperably coupled with the one or more computers and having tangible, non-transitory, machine-readable media storing one or more instructions that, when executed by the one or more computers, perform one or more operations, comprising: detecting, for each image frame of a plurality of image frames received from an image device, an initial estimate of image context, wherein the image frame context includes a class of an object in an image frame, a location of the object in the image frame, and a pixel-wise mask for the object in the image frame; generating an internal object representation of the object from an initial image frame of the plurality of image frames; matching, using the internal object representation, the object in a feature space of a next frame of the plurality of image frames; assigning, to the object, an identification for matching across image frames of the plurality of image frames; identifying, using the identification, the object across the plurality of image frames; estimating a three-dimensional distance from the object in an image frame of the plurality of image frames from the image device.

The foregoing and other described implementations can each, optionally, include one or more of the following features:
A first feature, combinable with any of the following features, wherein the plurality of images frames are RGB image frames.

A second feature, combinable with any of the previous or following features, for each image frame of a plurality of image frames, an initial estimate of image frame context, comprises using a YOLO model to generate a bounding box for the object in the image frame, the class of the object in the image frame, and a confidence value for the bounding box and the class.

A third feature, combinable with any of the previous or following features, for each image frame of a plurality of image frames, an initial estimate of image frame context, comprises using a Mask-RCNN model to generate the class of the object in the image frame and the pixelwise mask for the object in the image frame.

A fourth feature, combinable with any of the previous or following features, comprising: storing, for the initial image frame of the plurality of image frames, the internal object representation; and updating, for the next image frame of the plurality of image frames, the internal object representation.

A fifth feature, combinable with any of the previous or following features, comprising: estimating a position of the object in the next frame of the plurality of image frames if a detector fails to detect the object across individual image frames of the plurality of image frames.

A sixth feature, combinable ,with any of the previous or following features, wherein identifying, using the identification, the object across the plurality of image frames, comprises: receiving an image crop of the object across the plurality of image frames; and matching, using the image crop and the identification, the object in an image frame of the plurality of image frames.

A seventh feature, combinable with any of the previous or following features, comprising: transmitting, from an edge-based model for identifying risky driving events and from a client computing device to a server, a stream of text stream of data instead of a stream of video data for processing by the server.

An eighth feature, combinable with any of the previous or following features, wherein the edge-based model comprises models for tailgating, distraction, and relative vehicular speed.

A ninth feature, combinable with any of the previous or following features, comprising: upon detection, using the edge-based model, of a risky driving event, triggering an upload of a stream of video data to the server for processing.

A tenth feature, combinable with any of the previous or following features, comprising: analyzing driving video data to detect a behavior of interest in the driving video data; generating a data model which only requires telematics data to detecting the behavior of interest; detecting, using the data model, the behavior of interest; and determining, based on the detected behavior of interest, a user risk.

Aspects of embodiments can be implemented in the form of control logic using hardware circuitry (e.g., an application specific integrated circuit or field programmable gate array) and/or using computer software stored in a memory with a generally programmable processor in a modular or integrated manner, and thus a processor can include memory storing software instructions that configure hardware circuitry, as well as an FPGA with configuration instructions or an ASIC. As used herein, a processor can include a single-core processor, multi-core processor on a same integrated chip, or multiple processing units on a single circuit board or networked, as well as dedicated hardware. The computations can be performed in parallel by the different processing units and/or different processing threads of a single processing unit. Based on the disclosure and teachings provided herein, a person of ordinary skill in the art will know and appreciate other ways and/or methods to implement embodiments of the present disclosure using hardware and a combination of hardware and software.

Any of the software components or functions described in this application may be implemented as software code to be executed by a processor using any suitable computer language such as, for example, Java, C, C++, C#, Objective-C, Swift, or scripting language such as Perl or Python using, for example, conventional or object-oriented techniques. The software code may be stored as a series of instructions or commands on a computer readable medium for storage and/or transmission, suitable media include random access memory (RAM), a read only memory (ROM), a magnetic medium such as a hard-drive or a floppy disk, or an optical medium such as a compact disk (CD) or DVD (digital versatile disk), flash memory, and the like. The computer readable medium may be any combination of such devices. In addition, the order of operations may be re-arranged. A process can be terminated when its operations are completed but could have additional steps not included in a figure. A process may correspond to a method, a function, a procedure, a subroutine, a subprogram, etc. When a process corresponds to a function, its termination may correspond to a return of the function to the calling function or the main function.

Such programs may also be encoded and transmitted using carrier signals adapted for transmission via wired, optical, and/or wireless networks conforming to a variety of protocols, including the Internet. As such, a computer readable medium according to an embodiment of the present invention may be created using a data signal encoded with such programs. Computer readable media encoded with the program code may be packaged with a compatible device or provided separately from other devices (e.g., via Internet download). Any such computer readable medium may reside on or within a single computer product (e.g., a hard drive, a CD, or an entire computer system), and may be present on or within different computer products within a system or network. A computer system may include a monitor, printer, or other suitable display for providing any of the results mentioned herein to a user.

Any of the methods described herein may be totally or partially performed with a computer system including one or more processors, which can be configured to perform the steps. Any operations performed with a processor may be performed in real-time. The term *"real-time"* may refer to computing operations or processes that are completed within a certain time constraint. As examples, a time constraint may be 30 seconds, 1 minute, 10 minutes, 30 minutes, 1 hour, 4 hours, 1 day, or 7 days. Thus, embodiments can be directed to computer systems configured to perform the steps of any of the methods described herein, potentially with different components performing a respective step or a respective group of steps. Although presented as numbered steps, steps of methods herein can be performed at a same time or at different times or in a different order. Additionally, portions of these steps may be used with portions of other steps from other methods. Also, all or portions of a step may be optional. Additionally, any of the steps of any of the methods can be performed with modules, units, circuits, or other means of a system for performing these steps.

The above description is illustrative and is not restrictive. Many variations of the invention will become apparent to those skilled in the art upon review of the disclosure. The scope of the invention should, therefore, be determined not with reference to the above description, but instead should be determined with reference to the pending claims along with their full scope or equivalents.

One or more features from any embodiment may be combined with one or more features of any other embodiment without departing from the scope of the invention.

A recitation of "a", "an" or "the" is intended to mean "one or more" unless specifically indicated to the contrary. The use of "or" is intended to mean an "inclusive or," and not an "exclusive or" unless specifically indicated to the contrary. Reference to a "first" component does not necessarily require that a second component be provided. Moreover, reference to a "first" or a "second" component does not limit the referenced component to a particular location unless expressly stated. The term "based on" is intended to mean "based at least in part on."

All patents, patent applications, publications, and descriptions mentioned herein are incorporated by reference in their entirety for all purposes. None is admitted as prior art. Where a conflict exists between the instant application and a reference provided herein, the instant application shall dominate.

## Claims

1. A method comprising:
detecting, based at least in part on a first image obtained at a first time, a first indication of a first object included in the first image obtained using a vehicle sensor;
generating, based at least in part on the first indication, a first feature space representation of the first object included in the first image;
comparing the first feature space representation of the first object with a set of stored feature space representations;
responsive to the comparing:
assigning a first unique identifier to the first feature space representation;
generating, based on the first indication, a first distance of the first object from the vehicle sensor; and
associating the first distance, the first unique identifier, and the first time in memory.

2. The method of claim 1, wherein the first indication is generated using a You Only Look Once (YOLO) model and a portion of a Mask-Recurrent Neural Network (RCNN) model.

3. The method of claim 2, wherein the YOLO model generates a confidence score associated with a bounding box.

4. The method of claim 1, wherein the first indication is generated using a Re3 model.

5. The method of claim 1, wherein the first indication is generated using a You Only Look Once (YOLO) model, a portion of a Mask-Recurrent Neural Network (RCNN) model, and a Re3 model.

6. The method of claim 1, wherein assigning the first unique identifier comprises generating the first unique identifier, wherein the first unique identifier does not match a unique identifier already associated with the set of stored feature space representations.

7. The method of claim 1, wherein assigning the first unique identifier comprises assigning a unique identifier that was associated with a stored feature space representation included in the set of stored feature space representations to the first feature space representation.

8. The method of claim 1, further comprising:
detecting, based at least in part on a second image obtained at a second time, a second indication of the first object included in the second image obtained using the vehicle sensor;
generating, based at least in part on the second indication, a second feature space representation of the first object included in the second image;
comparing the second feature space representation of the first object with the first feature space representation of the first object;
responsive to the comparing:
assigning the first unique identifier to the second feature space representation;
generating, based on the second indication, a second distance of the first object from the vehicle sensor; and
associating the second distance, the first unique identifier, and the second time in memory.

9. The method of claim 1, further comprising:
detecting, based at least in part on the first image obtained at the first time, a second indication of a second object included in the first image obtained using the vehicle sensor;
generating, based at least in part on the second indication, a second feature space representation of the second object included in the first image;
comparing the second feature space representation of the second object with the set of stored feature space representations;
responsive to the comparing:
assigning a second unique identifier to the first feature space representation;
generating, based on the second indication, a second distance of the second object from the vehicle sensor; and
associating the second distance, the second unique identifier, and the first time in memory.

10. A system comprising:
one or more storage media storing instructions; and
one or more processors configured to execute the instructions to cause the system to perform operations comprising:
detecting, based at least in part on a first image obtained at a first time, a first indication of a first object included in the first image obtained using a vehicle sensor;
generating, based at least in part on the first indication, a first feature space representation of the first object included in the first image;
comparing the first feature space representation of the first object with a set of stored feature space representations;
responsive to the comparing:
assigning a first unique identifier to the first feature space representation;
generating, based on the first indication, a first distance of the first object from the vehicle sensor; and
associating the first distance, the first unique identifier, and the first time in memory.

11. The system of claim 10, wherein the first indication includes at least a bounding box around the first object or a pixel-wise mask for the first object.

12. The system of claim 11, wherein the first indication includes the bounding box and the pixel-wise mask.

13. The system of claim 10, wherein the first indication is generated using a You Only Look Once (YOLO) model and a portion of a Mask-Recurrent Neural Network (RCNN) model.

14. The system of claim 10, wherein the instructions cause the system to perform operations further comprising:
detecting, based at least in part on a second image obtained at a second time, a second indication of the first object included in the second image obtained using the vehicle sensor;
generating, based at least in part on the second indication, a second feature space representation of the first object included in the second image;
comparing the second feature space representation of the first object with the first feature space representation of the first object;
responsive to the comparing:
assigning the first unique identifier to the second feature space representation;
generating, based on the second indication, a second distance of the first object from the vehicle sensor; and
associating the second distance, the first unique identifier, and the second time in memory.

15. One or more non-transitory computer-readable storage media storing instructions that, upon execution by one or more processors of a system, cause the system to perform operations comprising:
detecting, based at least in part on a first image obtained at a first time, a first indication of a first object included in the first image obtained using a vehicle sensor;
generating, based at least in part on the first indication, a first feature space representation of the first object included in the first image;
comparing the first feature space representation of the first object with a set of stored feature space representations;
responsive to the comparing:
assigning a first unique identifier to the first feature space representation;
generating, based on the first indication, a first distance of the first object from the vehicle sensor; and
associating the first distance, the first unique identifier, and the first time in memory.

16. The non-transitory computer-readable storage media of claim 15, wherein the first indication is generated using a Re3 model.

17. The non-transitory computer-readable storage media of claim 15, wherein the first indication is generated using a You Only Look Once (YOLO) model, a portion of a Mask-Recurrent Neural Network (RCNN) model, and a Re3 model.

18. The non-transitory computer-readable storage media of claim 15, wherein assigning the first unique identifier comprises generating the first unique identifier, wherein the first unique identifier does not match a unique identifier already associated with the set of stored feature space representations.

19. The non-transitory computer-readable storage media of claim 15, wherein assigning the first unique identifier comprises assigning a unique identifier that was associated with a stored feature space representation included in the set of stored feature space representations to the first feature space representation.

20. The non-transitory computer-readable storage media of claim 15, wherein the instructions cause the system to perform operations further comprising:
detecting, based at least in part on the first image obtained at the first time, a second indication of a second object included in the first image obtained using the vehicle sensor;
generating, based at least in part on the second indication, a second feature space representation of the second object included in the first image;
comparing the second feature space representation of the second object with the set of stored feature space representations;
responsive to the comparing:
assigning a second unique identifier to the first feature space representation;
generating, based on the second indication, a second distance of the second object from the vehicle sensor; and
associating the second distance, the second unique identifier, and the first time in memory.
